# EUROPEAN PATENT SPECIFICATION

(11) **EP 2 441 817 B1**
(45) Date of publication and mention of the grant of the patent: **02.07.2014**
(21) Application number: 11185042.6
(22) Date of filing: 13.10.2011
(51) Int. Cl.: C10G 45/04, C10G 45/08, C10G 45/16, C10G 65/04, B01J 35/10, B01J 37/04, B01J 23/882, B01J 23/883, B01J 35/02, B01J 35/08

(54) **Ebullated bed hydrotreating process of heavy crude oil**
Fließbett-Hydrobehandlungsverfahren von schwerem Rohöl
Procédé d'hydrotraitement en lit bouillonnant pour pétrole brut lourd

(30) Priority: 13.10.2010 CN 201010509320; 04.11.2010 CN 201010536230; 04.11.2010 CN 201010536246
(43) Date of publication of application: 18.04.2012
(73) Proprietor: China Petroleum & Chemical Corporation, Beijing 100728 (CN); Fushun Research Institute of Petroleum and Petrochemicals, Sinopec, Wanghua District, Fushun 113001 Liaoning Province (CN)
(72) Inventor: Fang, Xiangchen, Liaoning Province 113001 (CN); Sun, Suhua, Liaoning Province 113001 (CN); Zhu, Huihong, Liaoning Province 113001 (CN); Wang, Gang, Liaoning Province 113001 (CN); Liu, Jie, Liaoning Province 113001 (CN); Yang, Guang, Liaoning Province 113001 (CN); Yuan, Shenghua, Liaoning Province 113001 (CN); Cai, Li, Liaoning Province 113001 (CN)
(74) Representative: HOFFMANN EITLE

(56) References cited:
- CN-A- 101 240 190
- GB-A- 2 026 533
- US-A- 4 328 127
- US-A- 4 549 957
- US-A- 4 886 594
- US-A- 5 047 142
- US-A1- 2004 004 030

## Description

### Technical field

The present invention relates to an ebullated bed hydrotreating process of heavy crude oil, particularly to an ebullated bed hydrotreating process of a poor-quality residua with a high content of heavy metal.

### Background art

Along with the gradual depletion of petroleum resources and the increasing demand for light oil as well as strict tendency of rules and regulations for environmental protection, oil refining industry attaches great importance to the reasonable utilization of petroleum resources, thus greatly promoting the development of residua hydrotreating techniques. The hydrotreating of heavy crude oil mainly includes fixed bed, moving bed and ebullated bed hydrogenation processes. With regard to the ebullated bed hydrogenation process, the catalyst could be added and withdrawn on-line, and this favors the maintenance of a higher and constant catalytic activity and long-cycle running time and has the strong adaptability for feedstock so that there could be flexible to process the poor-quality feedstock with high contents of metal impurities such as vacuum residua.

In the process of an ebullated bed hydrotreating technique, the crude oil and hydrogen flow upstream through the catalyst bed; the bed expands; the catalyst particles inside the reactor in a state of irregular motion, i.e., a "boiling" state. Accordingly, the catalyst is required not only to have the high hydrogenation and conversion activity, but also to have the high crushing strength and abrasion resistance. Since the catalyst is added and withdrawn from the reactor periodically under high temperature and high pressure, the catalyst is in a turbulence state all the time in the reactor. As a result, there would be more chances for crash and friction, and breaking and abrasion are likely to happen, which would increase the consumption of catalyst or bring unfavorable effects to the downstream equipment. In addition, since the catalyst shall be in an fluidized state in the reactor, there are also certain requirements for the bulk density, granular shape and particle size distribution of catalyst. It is usually believed that the more suitable granular shape is a spherical shape with a small particle size. Spherical particles are easy to flow, and do not have the keen and crude angles easy to be crashed as those in other shapes. An ebullated bed hydrotreating technique generally has a lower operation space velocity, yet a higher flow rate of feedstock is required to keep the catalyst in a fluidized state. The ebullated bed residua hydrocracking technique developed by Hydrocarbon Research Institute adopts the operation manner of recycling the liquid-phase feedstock to increase the flow rate in the reactor, but this would change the system state in the reactor. Small and spherical particles are apt to maintain a fluidized state in reactor so that the desired flow rate is smaller and the hot oil recycle of high temperature and high pressure could be omitted and thus the power cost could be saved.

Hydrodesulfurization and hydrodemetallization are two important reactions in the hydrogenation process of a heavy crude oil such as residua, and are also the main targets of heavy oil hydrogenation upgrading. The conversion of asphaltene is difficult for residua processing. The chemical structure of asphaltene is very complicated. It consists of a polymerized arene, an alkane chain and a cycloalkane ring. It has a great molecular weight and an average molecule size of about 6∼9 nm. The asphaltene structure further contains the heteroatoms such as sulphur, nitrogen and metal. 80% to 90% of metal in crude oil is enriched in asphaltene. These impurities are all "deeply hidden" in molecules, and could be removed only under the strict operation conditions. The decomposition rate of asphaltene in hydrogenation process is related to the pore size of the catalyst as used. The pore size of the catalyst shall be at least greater than 10 nm to make it possible for asphaltene to diffuse into the pore channels of catalyst. The catalyst shall also have a great pore volume to enhance the diffusion performance and deposite more impurities. Therefore, for the treatment of macromolecular compounds, the pore structure of catalyst is of critical importance: the catalyst shall have a certain amount of macropores to enable the larger bitumen molecules to get closer to the inner surface of catalyst so as to achieve the maximum hydrodemetallization degree. However, there shall not be too many macropores. Otherwise, the surface area would be decreased and the desulphurization activity would be reduced.

In the ebullated bed hydrogenation technique, the feedstock in reactor are in a strong backmixing state so that the grading technology of different catalysts could not be realized as in a fixed-bed hydrogenation technique. Consequently, a single reactor can generally only use one ebullated bed hydrogenation catalyst.

CN02109674.0 discloses a cascade ebullated bed residua hydrogenation method and apparatus. In a cascade ebullated bed reactor of more than two stages, a combination of microspheroidal hydrodemetallization, hydrodesulphurization and hydrodenitrogenation catalysts is used to carry out the residua hydrogenation reaction. The cascade ebullated bed reactor has a plurality of reaction stages with the separate catalyst addition and withdrawal openings. Each stage is arranged to a feeding distribution plate with a float valve structure and a three-phase separation component composed of a flow guide member, a flow barrier member, a gas-liquid separator plate and a demister. The feedstock in reactor could undergo an effective three-phase fluidization reaction and an effective three-phase separation, and could undergo the on-line catalyst replacement. Although this ebullated bed reactor and method realize the use of multiple ebullated bed catalysts in one reactor, a large amount of inner members are used in reactor. As a result, on the one hand, the structure is complicated and the equipment cost is high; on the other hand, the deficiencies such as a low utilance of reactor capacity, enlargement of reactor scale and instable operation are caused. Although the pore structure of an ebullated bed catalyst can be adjusted by use of existing techniques, for the catalysts of the same type, the distribution of macropores and micropores is generally not easy to adjust. Besides, the hydrogenation active metal components in macropores and micropores cannot be optimally adjusted even more. Therefore, it is not suitable for the flexible optimization with regard to the hydrogenation performance desired for different pore diameters.

USP6270654 discloses a catalytic hydrogenation process utilizing multi-stage ebullated bed reactors. The advantages of this technical process are sufficiently utilizing an external gas/liquid separation device by installing it in a first stage reactor so as to realize the more effective hydrocracking process, and increasing the loading of catalyst and reducing gas holdup in an ebullated bed reactor to optimize the process. This patent makes use of an ebullated bed reaction system of on-line replacement. The catalyst replacement rate of the first stage ebullated bed reactor is 0.05-0.5 Lb/Bbl. The active metals content contained in the catalysts for the first stage reactor and second stage reactor is 5-20 wt. %. The catalyst pore volume is 0.4-1.2mL/g; the surface area is 100-400m²/g; the average pore diameter is 8-25nm. The active metals are Mo-Co or Mo-Ni (the second stage). The catalyst withdrawn from the second stage reactor is added to the first reactor. The multi-stage hydrogenation technical process can increase the loading of catalyst and liquid volume, and meanwhile, reduce the gas holdup in each reactor, and thus could improve the effectiveness of this process.

USP4576710 discloses a preparation process of a hydrodesulphurization catalyst of residual feedstocks. This patent makes use of two ebullated bed reactors. Each spent catalyst withdrawn from reactor is regenerated and then transferred to the original reactor, or a fresh catalyst is added to the second reactor and spent catalyst of the second reactor is added in the first reactor, while the original catalyst in the first reactor is totally abandoned. The active metals are Co, Mo, Ni, W and mixtures thereof. The support is alumina, silica or a mixture thereof.

USP4457831 discloses a two-stage hydroconversion of hydrocarbon feedstocks using a residua recycle. The first stage reactor uses a catalyst with a suitable diameter. Conversion is performed under medium reaction conditions to generate hydrocarbon gases and liquid fractions, wherein the low fraction liquid is separated to become products, while the left gases and heavy liquid fractions are mixed to enter the second stage ebullated bed reactor. The second stage reactor comprises a catalyst with a larger diameter and produces the low boiling point hydrocarbon fractions under relatively strict conditions. Some substances at the vacuum column bottom are introduced into the second stage ebullated bed for reaction to increase the conversion and the yield of liquid hydrocarbons. The active metal components are Co, Mo, Ni, W and mixtures thereof. The support is alumina, silica or a mixture thereof.

USPP3809644 discloses a multi-stage ebullated bed hydrogenation process. This process is the production of low-sulphur fuel oil from the petroleum residua with a high-sulphur and high-metal content. The catalyst used in the reactor of the last stage is taken out for addition into the reactor of the previous stage, which can apparently lengthen the activity and effective life of catalyst. This process comprises three reactors, wherein the first reactor is a demetallized zone; the second reactor is a demetallized and desulphurized zone; the third reactor is a desulphurized zone. The catalysts as used are Mo-Co/Al₂O₃ and Mo-Ni/Al₂O₃. The pore volume is 0.4-0.65 mL/g, and 0.5-0.6 mL/g at best.

US 4886594 discloses a heavy crude oil hydrotreating process, wherein the feed is contacted first with a demetallation catalyst and then with a desulfurization catalyst.

In ebullated bed process, on-line addition and withdrawal system has a higher investment. According to calculation, the investment of a catalyst on-line addition and withdrawal system makes up around half of the total investment of an ebullated bed hydrogenation system. And the troubles during operation mainly occur in the addition and withdrawal system. yet the operation time cannot be ensured without using the addition and withdrawal system.

### Contents of invention

To improve the operation performance of an ebullated bed residua hydrotreating process and enhance its hydrogenation activity level and operation adaptability, the present invention provides a corresponding ebullated bed hydrotreating process.

In the heavy crude oil ebullated bed hydrotreating process of the present invention, a heavy crude oil and hydrogen are introduced into an ebullated bed reactor from the bottom of the reactor to react under heavy crude oil hydrotreating conditions, and then the products are discharged from the top of the reactor;

wherein a mixed catalyst is used in the ebullated bed reactor, said mixed catalyst is a physical mixture of at least two catalysts, said two catalysts are Catalyst A and Catalyst B, the mixed volume ratio of Catalyst A to Catalyst B is 1: (0.1-10), preferably 1: (0.5-5), i.e., the mixed volume ratio of Catalyst A to Catalyst B is 1:0.1-1:10, preferably 1:0.5-1:5; wherein Catalyst A and Catalyst B are in a completely mixed state,
wherein Catalyst A has a specific surface area of 80-200m²/g and an average pore diameter of more than 20 nm, preferably 22-40nm, the pore volume of the pores having a pore diameter of 30-300nm comprises 35 vol.%-60 vol.% of the total pore volume of Catalyst A (mercury injection method) (i.e. the percentage of the pore volume of the pores having a pore diameter of 30-300nm relative to the total pore volume of Catalyst A is 35 vol.%-60 vol.%); Catalyst A contains 1.0 wt%-10.0 wt%, preferably 1.5 wt%-6.5 wt%, of a metal oxide of group VIB (e.g., MoO₃ and 0.1 wt%-8.0 wt%, preferably 0.5 wt%-5.0 wt%, of a metal oxide of group VIII (e.g., NiO or CoO), by the total weight of Catalyst A; and
wherein Catalyst B has a specific surface area of 180-300m²/g and an average pore diameter of 9-15nm, the pore volume of the pores having a pore diameter of 5-20 nm comprises at least 70 vol. % of the total pore volume of Catalyst B(i.e. the percentage of the pore volume of the pores having a pore diameter of 5-20 nm relative to the total pore volume of Catalyst B is at least 70 vol. %); Catalyst B contains 3.0 wt%-20.0 wt%, preferably 6.0 wt%-15.0 wt%, of a metal oxide of group VIB (e.g., MoO₃), and 0.3 wt%-8.0 wt%, preferably 0.5 wt%-5.0 wt%, of a metal oxide of group VIII (e.g., NiO or CoO), by the total weight of Catalyst B. In some preferred embodiments, said catalyst may contain at least one additive selected from the following elements: B, Ca, F, Mg, P, Si, Ti and so on in a content of 0.5 wt%-5.0 wt%, by total weight of Catalyst B.

In some preferred embodiments, Catalyst B contains 10 vol.%-28 vol.%, preferably 10 vol.%-25 vol.%, of the pores having a pore diameter of greater than 20 nm, and the pore volume of the pores having a pore diameter of greater than 20 nm is not less than 0.1 mL/g and generally 0.1-0.3mL/g.

In some preferred embodiments, by the weight percent of the oxide in the respective catalyst, the percent of the hydrogenation active metal (a metal oxide of group VIB and a metal oxide of group VIII) in Catalyst B is higher than that of the hydrogenation active metal in Catalyst A by 1 to 18 percents, preferably 3 to 15 percents. By way of example, if the content of the hydrogenation active metal oxide in Catalyst A is 2% by the total weight of Catalyst A, then the content of the hydrogenation active metal oxide in Catalyst B is from 3% to 20%, preferably from 5% to 17% by the total weight of Catalyst B.

In some preferred embodiments, both Catalyst A and Catalyst B particles are spherical and have a diameter of 0.1-0.8mm, preferably 0.1-0.6mm.

In some preferred embodiments, Catalyst A and Catalyst B particles have an abrasion index ≤2.0 wt%.

In some preferred embodiments, the support of Catalyst A and Catalyst B is Al₂O₃.

In the heavy crude oil ebullated bed hydrotreating process of the present invention, heavy crude oil can be any heavy oil or residua feedstock In general, the heavy hydrocarbon feedstock with a distillation range >500°C is used, which comprises sulphur, nitrogen, asphaltene and a large amount of metal (e.g., V, Fe, Ni, Ca, Na and so on) compounds and has a metal content >150 µg/g. The ebullated bed hydrotreating conditions can be specifically determined in light of the feedstock properties and the requirement of the reaction conversion, which generally comprises: reaction temperature: 350-500°C; reaction pressure: 8-25MPa; the hydrogen/oil volume ratio: 100-1000; liquid hourly space velocity (LHSV): 0.3-5.0h⁻¹.

In the heavy crude oil ebullated bed hydrotreating process of the present invention, the conventional ebullated bed reactors in the prior art may be adopted, such as the ebullated bed hydrogenation reactor as described in CN02109404.7. According to the processing capacity of the unit, it may comprises one ebullated bed hydrogenation reactor, or a plurality of ebullated bed hydrogenation reactors for use in parallel and/or in series, wherein at least one ebullated bed hydrogenation reactor uses the mixed catalyst stated in the present invention.

In some preferred embodiments, 3 ebullated bed reactors in series are set up in the multi-stage ebullated bed heavy oil hydrotreating process of the present invention, i.e., a first ebullated bed reactor (referred to as R101 hereinbelow), a second ebullated bed reactor (referred to as R102 hereinbelow) and a third ebullated bed reactor (referred to as R103 hereinbelow). R101 and R102 are of a switch operation manner. That is, the operation is performed in cycle in accordance with the following mode:
(1) the feedstocks go through R101, R102, and R103 sequentially; and then
(2) R101 is switched off for replacing catalyst, and the feedstocks go through R102 and R103 sequentially; after the catalyst in R101 is replaced, the feedstocks go through R101, R102, and R103 sequentially; and/or
(3) R102 is switched off for replacing catalyst, and the feedstocks go through R101 and R103 sequentially; after the catalyst in R102 is replaced, the feedstocks go through R101, R102, and R103 sequentially.

In the process of the present invention, at least one reactor of R101, R102 and R103 is loaded with the mixed catalyst comprising at least Catalyst A and Catalyst B in accordance with the abovementioned methods of the present invention.

In the process of the present invention, a catalyst on-line addition and withdrawal system for the ebullated bed reactors R101, R102 and/or R103 can be omitted to save the equipment investment. The switching time of R101 or R102 could be determined according to the deactivation rate of catalyst. R101 is generally switched off every 3 to 9 months for replacing catalyst once; R102 is generally switched off every 5 to 18 months for replacing catalyst once. The specific time could be determined in light of reaction requirements. Since the feedstocks have gone through R101 and R102 for the hydrogenation and impurity-removal reaction, R103 could be maintained for a longer cycle running time, such as around 3 years in general.

In the process of the present invention, a high-pressure low-temperature reactor R104 is preferentially set up. The pressure grade of R104 is identical to that of the reaction system (omitting the pressure loss caused by flow of feedstocks). The temperature of R104 is 150-300°C. R104 is adjusted to the desired operation conditions before R101 or R102 needs replacing of the catalyst. When R101 or R102 is switched off from the reaction system, the catalyst in R101 or R102 is rapidly withdrawn into R104 to reduce the time for reactor to replace catalyst and reduce the effects caused by the switching on the reaction system. With the use of R104, the replace time of catalyst could be reduced by more than 50%.

In the process of the present invention, it is preferred that the three ebullated bed reactors have the identical volume. The operation conditions could be determined according to the properties of feedstocks and the reaction effects to be achieved. The reaction pressure is generally 8-25MPa; the hydrogen/oil volume ratio is generally 100:1-1000:1; the liquid hourly space velocity (LHSV) is generally 0.1-5.0h⁻¹. R101 generally has the reaction temperature of 380-430°C; R102 generally has the reaction temperature of 380-430°C; R103 generally has the reaction temperature of 380-440°C.

In the process of the present invention, while R101 or R102 is switched off from the reaction system for replacing catalyst, to prevent the influence on the reaction effects, the feeding amounts could be reduced.

For example, the feeding amounts are reduced to 50%-80% (mass) of those for the normal operation. Also, the reaction temperature may be suitably increased to achieve the constant reaction effects.

In the reactors in which the mixed catalyst comprising at least Catalyst A and Catalyst B as stated in the present invention is not used, the catalysts with the following properties could be used:

The catalyst used in R101 (if the mixed catalyst comprising at least Catalyst A and Catalyst B as stated in the present invention is not used therein) has the properties: the catalyst has a specific surface area of 80-200m²/g and an average pore diameter of greater than 20 nm, preferably 22-40 nm, the pore volume of the pores having a pore diameter >20 nm comprises at least 40 vol.% of the total pore volume; by weight, the catalyst contains 1.0%-10.0%, 1.5%-8.5% at best, of a metal oxide of group VIB (e.g., MoO₃), and 0.1%-8.0%, 0.5%-5.0% at best, of a metal oxide of group VIII (e.g., NiO or CoO).

The catalyst used in R102 may be identical to or different from that used in R101. The catalyst used in R102 (if the mixed catalyst comprising at least Catalyst A and Catalyst B as stated in the present invention is not used therein) has the properties: the catalyst has a specific surface area of 80-300m²/g and an average pore diameter of greater than 12 nm, preferably 12-30 nm, the pore volume of the pores having a pore diameter >20 nm comprises at least 20 vol.% of the total pore volume; by weight, the catalyst contains 1.0%-15.0%, 1.5%-13% at best, of a metal oxide of group VIB (e.g., MoO₃), and 0.1%-8.0%, 1.0%-5.0% at best, of a metal oxide of group VIII (e.g., NiO or CoO); an additive may also be contained, and can be chosen from the following elements: B, Ca, F, Mg, P, Si and Ti etc.; the additive can be present in an amount of 0%-5.0%, calculated by weight of the additive element.

The catalyst used in R103 (if the mixed catalyst comprising at least Catalyst A and Catalyst B as stated in the present invention is not used therein) has the properties: the catalyst has a specific surface area of 180-300m²/g and an average pore diameter of greater than 9 nm, preferably 9-15 nm, the pore volume of the pores having a pore diameter >20 nm comprises at least 10 vol.% of the total pore volume; by weight, the catalyst contains 3.0%-20.0%, 6.0%-18.0% at best, of a metal oxide of group VIB (e.g., MoO₃), and 0.3%-8.0%, 0.5%-5.0% at best, of a metal oxide of group VIII (e.g., NiO or CoO); at least one additive may be contained, and can be chosen from the following elements: B, Ca, F, Mg, P, Si and Ti etc.; the additive can be present in an amount of 0.5%-5.0%, calculated by weight of the additive element.

In some preferred embodiments, the catalyst particles used in all of the three ebullated bed reactors are spherical and have a diameter of 0.1-0.8mm, preferably 0.1-0.6mm.

In some preferred embodiments, the process of the present invention further includes a fixed bed reactor in combination with said ebullated bed reactors. After the hydrogenation reaction in the ebullated bed, the products are discharged from the top of the ebullated bed reactors to enter the fixed bed reactor so as to carry out a further hydrogenation reaction under the hydrogenation conditions of fixed bed. The reaction products of the fixed bed reactor are discharged from the bottom of the fixed bed reactor to enter a separation system.

The fixed bed hydrotreating may adopt the commercial fixed bed hydrotreating catalysts, such as one or more of FZC-20, FZC-30, FZC-40 and so on manufactured by Fushun Research Institute of Petroleum and Petrochemicals. The fixed bed hydrotreating catalyst may also be produced by the existing methods in the art.

In some preferred embodiments, the fixed bed hydrotreating conditions generally comprises: reaction temperature: 350-420°C; reaction pressure: 8-25MPa; the hydrogen/oil volume ratio: 100-1000; liquid hourly space velocity (LHSV): 0.3-2.0h⁻¹.

The present invention uses a mixture of Catalyst A and Catalyst B with different physico-chemical properties to make up the deficiencies when the two are used alone. Because of the restriction of catalyst preparation techniques, it is impossible to satisfy different pore distributions and different active metal distributions in the same type of catalyst. By utilizing the feature of microspheroidal catalyst and completely back-mixed of ebullated bed , the process of the present invention uses the catalysts with different properties in mixture to form a macroscopic ebullated bed hydrotreating reaction system having different pore distributions and different active metal distributions and improve the reaction effects of the ebullated bed hydrotreating reaction system. Meanwhile, since the ebullated bed has the character of being added and withdrawn catalyst on line to keep the constant hydrogenation activity, the proportions of the two catalysts could be adjusted in light of need to adapt to the changes of catalyst activity and processing feedstocks, and thus the operation flexibility is largely improved. Hydrogenation active metals of Catalyst A and Catalyst B are used in mixture, which can enhance the overall reaction performance of the reaction system and endow a higher hydrodesulphurization activity and demetallization activity as well as the appropriate asphaltene conversion performance and produce the synergistic effects. Long-term experiments show that the supplemental amount of the fresh catalyst in the ebullated bed process can be reduced by more than 10%. Catalyst A has the large pore size and the higher metal deposite, and could lengthen the running life of catalyst. In ebullated bed reactors, Catalyst A and Catalyst B are in a completely mixed state, and the reaction feedstocks do not go through firstly Catalyst A and then Catalyst B. Catalyst B is still likely to contact the metal-containing macromolecules. Accordingly, Catalyst B shall have the suitable structure and a suitable amount of macropores to ensure the suitable metal impurities deposite of Catalyst B in the ebullated bed reaction system and enhance the stability and activity.

Besides, the present invention uses a multi-stage ebullated bed residua hydrotreating process without the inclusion of a catalyst addition and withdrawal system, which thus largely reduces the equipment investment and the possibility of accidents; the long-cycle stable operation of ebullated bed without the use of a catalyst on-line addition and withdrawal system is realized by the manners such as conducting the appropriate switching tests, using a backup reactor and adjusting operation conditions or the like.

### Depiction of drawings

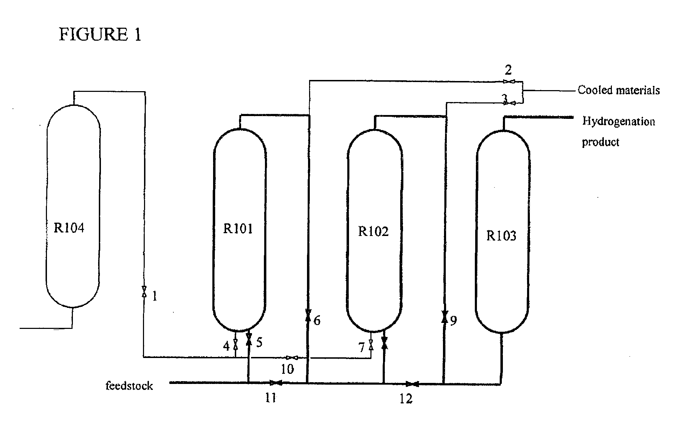

Figure 1 is a flow diagram of the multi-stage ebullated bed heavy oil hydrotreating process of the present invention,
wherein 1 denotes valve 1, 2 denotes valve 2, 3 denotes valve 3, 4 denotes valve 4, 5 denotes valve 5, 6 denotes valve 6, 7 denotes valve 7, 8 denotes valve 8, 9 denotes valve 9, 10 denotes valve 10, 11 denotes valve 11 and 12 denotes valve 12.

The ebullated bed reaction unit is set up with 3 reactors. The first reactor and second reactor can be switched off and the third reactor is not switched so as to replace catalysts and attain the long-cycle operation. The technical devices could have an operation cycle of 3 years and are in synchronization with the catalytic cracking device as to start and stop. The ebullated bed residue hydrogenation reactors are not set up with a catalyst on-line addition and withdrawal system to save investment.

The ebullated bed hydrogenation is set up with three reactors (R101, R102 and R103) in series, while a high-pressure low-temperature reactor (R104) with the same volume is set up for the switch operation of reactors. No catalyst on-line addition and withdrawal system is set up to save investment. When the catalyst of R101 is in the late period of operation, this reactor is switched off. The feedstock of reaction goes through the other two reactors in sequence. After the catalyst is withdrawn from the switched-off reactor R101, the new catalyst is loaded. After reactor R101 is incorporated into the system, it operates for a period of time before the second reactor R102 is switched off, and the reaction feedstock goes through R101 1 and R103 in sequence. After the catalyst is withdrawn from the switched-off reactor R102, the fresh catalyst is loaded. Then reactor R102 is incorporated into the system, and the reaction feedstock goes through R101, R102, and R103 in sequence.

Specifically, it is as shown in Figure 1:
(1) when R101, R102 and R103 are in complete use, valve 5, valve 6, valve 8 and valve 9 are opened; valve 11 and valve 12 are closed; valve 1, valve 2, valve 3, valve 4, valve 7 and valve 10 are closed;
(2) when reactor R101 1 is switched off, valve 11, valve 8 and valve 9 are opened; valve 5, valve 6 and valve 12 are closed; at this time, reactor R101 is cleaned, and valve 1, valve 2 and valve 4 are opened for performing a cooling cycle, the catalyst is discharged, and valve 3, valve 10 and valve 7 are closed;
(3) when reactor R102 is switched off, valve 5, valve 6 and valve 12 are opened; valve 8, valve 9 and valve 11 are closed; at this time, reactor R102 is cleaned, and valve 1, valve 10, valve 7 and valve 3 are opened for performing a cooling cycle; the catalyst is discharged, and valve 4 and valve 2 are closed.

### Embodiments

In the ebullated bed hydrotreating process of the present invention, Catalyst A and Catalyst B can be prepared by the existing methods in light of performance requirements, for example, prepared with reference to the existing techniques such as US7074740, US5047142, US4549957, US4328127 and CN200710010377.5.

The preparation process of the ebullated bed hydrotreating catalyst comprises firstly preparing a microspheroidal catalyst support and then loading the desired hydrogenation active metal components by an impregnation method. The preparation process of the catalyst support is described as follows: the raw material of a catalyst support with a suitable humidity is produced into the particles with the suitable size, and then said particles are subjected to spheroidization treatment, and then the spherical particle is dried and calcined to form a spherical catalyst support.

The drying and calcination of the catalyst support can adopt the conditions well known to a person skilled in the art. For example, drying may adopt the natural drying or drying at 80-150°C; calcination could be perfonned at 600-1000°C for 1-6 h. The loading of the active hydrogenation metal components by an impregnation method could be performed by the methods well known to a person skilled in the art. For example, the desired active metal salt is formulated into a solution. Then, the solution containing an active metal salt is used to impregnate the catalyst support. And then the final catalyst is obtained by drying and calcination. The drying process of the catalyst adopts the natural drying or the drying at 60-150°C. The calcination process of the catalyst is performed at 400-600°C for 1-6 h.

The raw materials of the microspheroidal support of the ebullated bed hydrotreating catalyst of the present invention can be determined in light of application requirements. For the heavy or residue hydrotreating catalyst support, the suitable raw materials are the various precursors of alumina. Suitable additives may be added into the support raw materials to improve the various properties of the support. The common additives are such as carbon black, sesbania powder, starch, cellulose, polyol and so on. The hydrogenation active metal components and additives may also be added as required, such as one or more of tungsten, molybdenum, nickel and cobalt; the common additives are silicon, phosphorous, boron, fluorine, titanium, zirconium and so on. The addition amounts of additives and metal components of the catalyst support are determined in light of the application requirements of catalyst. The catalyst is sulphurized before applied to the heavy feedstock hydrogenation reaction to convert the active metal and metal additive into a sulphurized state. Sulphurization may be performed by use of the sulphurization methods well known to a person skilled in the art.

The specific surface area of the catalyst is determined by using an N₂ adsorption method (the specific surface area of the solid substance is determined by a GB/T19587-2004 gas adsorption BET method). The average pore size is calculated from the specific surface area and pore volume determined by an N₂ adsorption method (average pore size (nm) =4000 × pore volume/specific surface area). Both pore volume and pore size distribution are determined by using an N₂ adsorption method unless specifically indicated.

As used herein, the singular form "a", "an" and "the" include plural references unless the context clearly dictates otherwise.

### Examples

The technical features and reaction effects of the present invention are further described by the following examples, but are not limited to the examples. The percentage is weight percentage unless specifically indicated.

### Example 1-1

### Catalyst preparation

### 1. Preparation of Catalyst A

A spherical catalyst support with an average pore size of 22 nm and a diameter of spherical particles of 0.4 mm was prepared. The other preparation steps were carried out with reference to US4328127 and CN200710010377.5.

The Mo-Ni solution was prepared by a conventional method. The solution had a MoO₃ content of 4.01% and a NiO content of 1.03%. This solution was used to impregnate the abovementioned support according to an equivolume impregnation method to obtain the final catalyst A whose properties were as shown in Table 1-1.

### 2. Preparation of Catalyst B

A spherical catalyst support with an average pore size of 11 nm was prepared. The spherical catalyst particles were 0.4 mm. The other preparation steps were carried out with reference to US7074740 and CN200710010377.5.

The Mo-Co-P solution was prepared by a conventional method. The solution had a MoO₃ content of 11.20% and a CoO content of 2.59% and a P content of 1.05%. This solution was used to impregnate the abovementioned support according to an equivolume impregnation method to obtain the final catalyst B whose properties were as shown in Table 1-1.

### Example 1-2

Catalyst A and Catalyst B as prepared in Example 1-1 were mixed in a volume ratio of 1:0.5 and introduced into a 1 L autoclave for performing a vacuum residue hydrotreating test in the presence of hydrogen. The vacuum residue chosen for the test had the properties: distillation range: 520°C⁺; sulphur content: 2.8 wt%; metal (Ni+V+Fe) content: 357µg/g; asphaltene content: 6.8% (C₇ insoluble) . Test conditions were: reaction temperature: 408°C; reaction pressure: 15MPa; reaction time: 0.5 h; oil/catalyst volume ratio: 15. The evaluation results were shown in Table 1-2.

### Example 1-3

Catalyst A and Catalyst B in Example 1-1 were mixed in a volume ratio of 1:5. The reaction pressure was 13 MPa. Other test conditions were same as Example 1-2. The evaluation results were shown in Table 1-2.

### Example 1-4

Catalyst A and Catalyst B in Example 1-1 were mixed in a volume ratio of 1:8. The reaction pressure was 15 MPa. The reaction time was 1 h. Other test conditions were same as Example 1-2. The evaluation results were shown in Table 1-2.

### Example 1-5

Catalyst A and Catalyst B in Example 1-1 were mixed in a volume ratio of 1:2. The test conditions comprised: reaction temperature: 443 °C; reaction pressure: 15 MPa; the reaction time: 0.5 h. Other test conditions were same as Example 1-2. The evaluation results were shown in Table 1-2.

### Example 1-6

Catalyst A and Catalyst B in Example 1-1 were mixed in a volume ratio of 1:2. The test conditions comprised: reaction temperature: 443 °C; reaction pressure: 11 MPa; the reaction time: 3 h. Other test conditions were same as Example 1-2. The evaluation results were shown in Table 1-2.

### Example 1-7

A series of Catalysts A (wherein the average pore diameter and relevant parameters were varied, and all other aspects were same) and Catalysts B (wherein the pore volume of the pores with a pore diameter of greater than 20 nm and relevant parameters were varied, and all other aspects were same) were prepared in accordance with the methods of Example 1-1, and their properties were respectively shown in Tables 1-3 and 1-4. Moreover, the method of Example 1-6 was used to carry out test. The evaluation results were shown in Table 1-5.

### Comparative Example 1-1

Only Catalyst B in Example 1-1 was used to perform the evaluation test. Other test conditions were identical to those of Example 1-2. The evaluation results were shown in Table 1-2.

### Comparative Example 1-2

Only Catalyst A in Example 1-1 was used to perform the evaluation test. Other test conditions were identical to those of Example 1-2. The evaluation results were shown in Table 1-2.

**Table 1-1 Major Physico-Chemical Properties of Example Catalyst**

| Items | Catalyst A | Catalyst B |
|---|---|---|
| MoO₃, wt% | 4.05 | 9.96 |
| NiO(CoO), wt% | 0.73 | 2.26 |
| P, wt% | - | 0.91 |
| Abrasion index. wt% | <2.0 | <2.0 |
| Particle diameter, mm | 0.4 | 0.4 |
| Total pore volume, mL/g | 1.49** | 0.67 |
| Specific surface area, m²/g | 142 | 239 |
| Average pore diameter. nm | 25 | 11 |
| Pore size distribution* | Pores of < 8nm comprise 2%** Pores of 30-300 nm comprise 50%** | Pores of 5-20nm comprise 80% Pores of greater than 20nm comprise 18% and have a pore volume of 0.12mL/g |

| | | |
|---|---|---|
| *pore size distribution refers to the percentage of the pore volume of the pores with the diameters within the stated range relative to the total pore volume. **measured by a mercury injection method | | |

**Table 1-2 Evaluation Results of Catalyst Performances**

| Items | | Example 1-2 | Example 1-3 | Example 1-4 | Example 1-5 | Example 1-6 | Comparative Example 1-1 | Comparative Example 1-2 |
|---|---|---|---|---|---|---|---|---|
| Process conditions | | | | | | | | |
| | Temperature /°C | 408 | 408 | 408 | 443 | 443 | 408 | 408 |
| | Pressure/MPa | 15 | 13 | 15 | 15 | 11 | 15 | 15 |
| | | | | | | | | |
| | Reaction time/h | 0.5 | 0.5 | 1.0 | 0.5 | 3 | 0.5 | 0.5 |
| | | | | | | | | |
| | Oil/catalyst volume | | | | | | | |
| | ratio | 15 | 15 | 15 | 15 | 15 | 15 | 15 |
| | | | | | | | | |
| Relative hydrogenation activity | | | | | | | | |
| | Desulphurization rate | | | | | | | |
| | | 95 | 104 | 115 | 121 | 145 | 100 | 85 |
| | Demetallization rate* | 137 | 104 | 108 | 142 | 140 | 100 | 138 |
| | | 116 | 103 | 110 | 124 | 132 | 100 | 118 |
| | Asphaltene | | | | | | | |
| | conversion | | | | | | | |

| | | | | | | | | |
|---|---|---|---|---|---|---|---|---|
| *the metal was(Ni + V + Fe). | | | | | | | | |

In the above table, the activity of Comparative Example 1-1 was taken as 100, and the activity values of other examples were the relative activity obtained by being compared with Comparative Example 1-1.

It can be seen from the above table: the hydrogenation Catalysts A and B with different physico-chemical properties were used in mixture, and the resultant hydrogenation activity was significantly improved in one or more aspects of hydrodesulphurization, hydrodemallization rate and asphaltene conversion as compared to the catalysts used alone, and synergy was generated, so that the deficiencies of using a single catalyst were overcome.

**Table 1-3**

| Catalyst properties | Catalyst Aa | Catalyst Ab | Catalyst Ac(i.e., Catalyst A obtained in Example 1-1) | Catalyst Ad |
|---|---|---|---|---|
| Average pore diameter, nm | 16 | 22 | 25 | 34 |
| Specific surface area, m²/g | 201 | 161 | 142 | 90 |
| **Proportion of the pore volume of the pores with a pore diameter of 30-300nm relative to the total pore volume | 18% | 38% | 50% | 55% |

| | | | | |
|---|---|---|---|---|
| ** measured by a mercury injection method | | | | |

**Table 1-4**

| Catalyst properties | Catalyst Ba | Catalyst Bb | Catalyst Bc(i.e., Catalyst B prepared in Example 1-1) | Catalyst Bd |
|---|---|---|---|---|
| Average pore diameter, nm | 9nm | 10nm | 11nm | 15nm |
| Specific surface area, m²/g | 291 | 252 | 239 | 215 |
| Proportion (volume) of the pore volume of the pores with a pore diameter of 5-20nm relative to the total pore volume, % | 73 | 78 | 80 | 72 |
| Proportion (volume) of the pores with a pore diameter of greater than 20nm, % | 11 | 16 | 18 | 25 |
| Pore volume of the pores with a pore diameter of greater than 20nm, mL/g | 0.07 | 0.11 | 0.12 | 0.20 |

**Table 1-5 (process conditions and catalyst proportion were identical to those of Example 1-6)**

| Items | Aa+Ba | Aa+Bb | Ab+Ba | Ab+Bb | Ac+Bc(i.e., Example 1-6) | Ac+Bd | Ad+Bd |
|---|---|---|---|---|---|---|---|
| Desulphurization rate | 100 | 105 | 107 | 117 | 127 | 122 | 120 |
| Demetallization rate* | 100 | 108 | 110 | 115 | 138 | 143 | 150 |
| Asphaltene conversion | 100 | 105 | 108 | 110 | 132 | 138 | 143 |

| | | | | | | | |
|---|---|---|---|---|---|---|---|
| *the metal was(Ni+V+Fe). | | | | | | | |

In the above table, the activity value obtained from Item Aa+Ba was taken as 100, and the activity values obtained by other items were the relative activity obtained by being compared with Item Aa+Ba.

### Example 2

The example of the multi-stage ebullated bed heavy oil hydrotreating process of the present invention is given as follows.

### Example 2-1

### Catalyst Preparation

A spherical catalyst support with an average pore size of 24 mn and a diameter of spherical particles of 0.1-0.3 mm was prepared. The Mo-Ni solution was prepared by a conventional method. The solution had a MoO₃ content of 6.00% and a NiO content of 1.80%. This solution was used to impregnate the abovementioned support according to an equivolume impregnation method to obtain the final catalyst 1-C whose properties were as shown in Table 2-1.

A spherical catalyst support with an average pore size of 15 nm was prepared. The spherical catalyst particles were 0.1-0.3 mm. The Mo-Ni-P solution was prepared by a conventional method. The solution had a MoO₃ content of 8.50% and a NiO content of 2.50% and a P content of 1.00%. This solution was used to impregnate the abovementioned support according to an equivolume impregnation method to obtain the final catalyst 2-C whose properties were as shown in Table 2-1.

**Table 2-1 Major Physico-Chemical Properties of Example Catalyst**

| Items | 1-C | 2-C |
|---|---|---|
| MoO₃, wt% | 6.82 | 8.36 |
| NiO(CoO), wt% | 1.69 | 2.18 |
| P, wt% | - | 1.05 |
| Abrasion index, wt% | <2.0 | <2.0 |
| Particle diameter, mm | 0.1-0.3 | 0.1-0.3 |
| Pore volume, mL/g | 1.57* | 0.68 |
| Specific surface area, m²/g | 136 | 175 |
| * Proportion of the pore volume of pores having a pore size of greater than 20 nm relative to the total pore volume, % | 48.02 | 25.14 |
| Average pore diameter | 25nm | 15nm |

| | | |
|---|---|---|
| * measured by a mercury injection method | | |

Therein, reactor R101 was loaded with Catalyst 1-C; reactor R102 was loaded with Catalyst 2-C; reactor R103 was loaded with a mixed catalyst of Catalyst A and Catalyst B in Table 1-1 with a volume ratio of 1:1.

### Example 2-2

The ebullated bed hydrogenation reactor according to the present invention was a three-phase ebullated bed reactor, and the ebullated bed reactors disclosed in CN02109404.7, CN200610134154.5 and CN200710012680.9 etc could be adopted to satisfy the separation of the three phases of gas, liquid and solid inside the ebullated bed reactor.

The catalysts in Example 2-1 were used to be respectively fed into three 1 L three-phase ebullated bed reactors in series to perform a vacuum residue hydrotreating test in the presence of hydrogen. The vacuum residue chosen for the test had the properties: distillation range: 520°C⁺; sulphur (S) content: 2.60 wt%; metal (Ni+V+Fe) content: 253µg/g; CCR (Conradson carbon residue) content: 12.1%; asphaltene content: 5.9% (C₇ insoluble) .

Test conditions and evaluation results were shown in Table 2-2.

**Table 2-2 Process conditions and Properties of Product after Hydrogenation in Example 2-2**

| | Reactor | R101 | R102 | R103 |
|---|---|---|---|---|
| Process conditions | | | | |
| | Reaction | 400 | 395 | 390 |
| | temperature/°C | | | |
| | | | | |
| | Reaction | 15 | | |
| | pressure/MPa | | | |
| | Space velocity/h⁻¹ | 1.0 | | |
| | Hydrogen/oil volume | 900:1 | | |
| | ratio | | | |
| Properties of the product oil | | | | |
| | S, wt% | 1.72 | 0.82 | 0.22 |
| | (Ni-+-V-Fe), µg/g | 90.15 | 31.03 | 5.38 |
| | CCR, % | 11.23 | 8.51 | 6.15 |
| | Asphaltene(C₇ | 1.8 | 0.7 | <0.1 |
| | insoluble), wt% | | | |

It can be seen from Table 2-2 that the product obtained from R103 can act as the feedstock of a catalytic cracking process.

### Example 2-3

After Catalyst 1-C of the ebullated bed hydrogenation reactor R101 operated for half a year, the properties of the product oil cannot satisfy requirements (see Table 2-3). This showed that that the catalyst could not satisfy requirements and should be changed.

Reactor R101 was switched off. Fresh feedstock and hydrogen were introduced into reactor R102 directly; at this moment, the fresh feedstock was 70% of the original feedstock. The switched-off reactor R101 was maintained at the reaction pressure, into which recycled hydrogen and quenching oil were introduced to maintain the fluidization of the catalyst bed and avoid the unfluidized catalyst bed. When the temperature in reactor R101 was reduced to around 200°C, the catalyst of the reactor was withdrawn into the high-pressure low-temperature reactor R104 under pressure control; the catalyst in R104 was sufficiently washed, and then withdrawn to wait for the next operation. After the catalyst in reactor R101 was withdrawn into R104, a fresh catalyst was added in a low-pressure storage tank set up on the ground, and then the tank was switched to a hydrogen state; a fresh catalyst high-pressure tank was set up on top of the reactor, and said high-pressure tank was isolated from the reactor at first, and then the catalyst in the tank on the ground was transported to said high-pressure tank by hydrogen under low pressure; then the pressure of the high-pressure tank was raised above the reactor pressure, and the valve at the bottom was opened to add the catalyst into the reactor, and this operation was repeated till the catalyst in the ground catalyst tank was wholly added in the reactor.

Upon switching, the process conditions and product properties of R102 and R103 were shown in Table 2-3.

**Table 2-3 Process conditions and Product Properties when Switching in Example 2-3**

| | Reactor | R101 | R102 | R103 |
|---|---|---|---|---|
| Process conditions | | Before | After switching | After switching |
| | | switching | | |
| | Reaction | 420 | 405 | 400 |
| | tempcrature/°C | | | |
| | Reaction | 15 | 15 | |
| | pressure/MPa | | | |
| | Space velocity/h⁻¹ | 1.0 | 0.70 | |
| | Hydrogen/oil volume | 900:1 | 900. 1 | |
| | ratio | | | |
| Properties of the product | | | | |
| oil | | | | |
| | S,wt% | 2.31 | 0.98 | 0.27 |
| | (Ni+V+Fe), µg/g | 215 | 46.78 | 7.98 |
| | CCR, % | 11.92 | 9.12 | 6.94 |
| | Asphaltene(C₇ insoluble), % | 5.0 | 0.8 | <0.1 |

It can be seen from Table 2-3: when the switching operation of R101 was carried out, the qualified catalytic cracking feestock can be obtained by reducing the flow rate of the feedstock entering reactor R102 and increasing the reaction temperatures of reactors R102 and R103.

### Example 2-4

Reactor R101 was incorporated into the operation; before reactor 101 was incorporated into the system, the pressure was adjusted to the normal pressure, and the temperature was around 200°C; a 20% fresh feedstock was gradually introduced, while the reaction temperature was increased, and the fresh feedstock was gradually increased to 100%; with the increase of reaction temperature, the residue feedstock was gradually increased to 100%. At this moment, the process was performed following the multi-stage ebullated bed heavy oil, residue hydrotreating process. After reactor R101 was switched off, the process conditions and product properties of the various reactors were shown in Table 2-4.

**Table 2-4 Process conditions and Product Properties when Switching in Example 2-4**

| | Reactor | R101 | R102 | R103 |
|---|---|---|---|---|
| Process conditions | | After switching | After switching | After switching |
| | Reaction temperature | 400 | 400 | 393 |
| | /°C | | | |
| | Reaction pressure | 15 | | |
| | /Mpa | | | |
| | Space velocity /h⁻¹ | 1.0 | | |
| | Hydrogen/oil volume | 900: I | | |
| | ratio | | | |
| Properties of the | | | | |
| generated oil | | | | |
| | S. % | 1.68 | 0.91 | 0.21 |
| | (Ni+V+Fe), µg/g | 85.1A | 45.21 | 9.13 |
| | CCR, % | 11.02 | 8.32 | 5.90 |
| | Asphahene(C₇ | 1.7 | 0.9 | <0.1 |
| | insoluble), % | | | |

It can be seen from Table 2-4: after the catalyst in R101 was replaced and R101 was incorporated into the system, the product obtained in R103 was the qualified catalytic cracking feedstock.

### Example 2-5

After the various reactors in Example 2-4 run for 1000 h, the process conditions and product properties of the various reactors were shown in Table 2-5.

**Table 2-5 Process conditions and Product properties after 1000 h Operation of Units**

| | Reactor | R101 | R102 | R103 |
|---|---|---|---|---|
| Process conditions | | Operation for 1000h | | |
| | Reaction temperature | 403 | 410 | 395 |
| | /°C | | | |
| | Reaction pressure /Mpa | | 15 | |
| | Space velocity /h⁻¹ | 1.0 | | |
| | Hydrogen/oil volume | 900: 1 | | |
| | ratio | | | |
| Properties of the generated oil | | | | |
| | S, % | 1.78 | 0.85 | 0.26 |
| | (Ni+V+Fe), µg/g | 88.15 | 46.89 | 12.36 |
| | CCR, % | 10.89 | 8.14 | 6.05 |
| | Asphaltene(C-insoluble), % | 1.6 | 0.7 | <0.1 |

It can be seen from Table 2-5: after the various reactors operated normally for 1000 h, the stability was good, and the product quality did not change markedly, which was suitable for the catalytic cracking feedstock.

### Example 3

In this set of tests, the combination of ebullated bed and fixed bed was adopted. Catalyst A and Catalyst B were those in Table 1-1. The fixed bed catalysts were the commercial catalysts FZC-30 and FZC-40 used for commercial units and manufactured by Fushun Research Institute of Petroleum and Petrochemicals. Their properties were shown in Table 3-1.

### Example 3-1

Catalyst A and Catalyst B in Example 1 were mixed in a volume ratio of 1:0.5 and introduced into a 1 L autoclave for performing a vacuum residue hydrotreating test in the presence of hydrogen. The vacuum residue for the test had the properties: distillation range: 520°C⁺; sulphur content: 2.8 wt%; metal (Ni+V+Fe) content: 357µg/g; asphaltene content: 6.8%(C₇ insoluble). Test conditions were: reaction temperature: 408°C; reaction pressure: 13MPa; reaction time: 0.5 h; oil/catalyst volume ratio: 15. The test was carried out for a few times by repeating the abovementioned conditions, and then the catalyst was removed by filtration to obtain the product oil. The product oils obtained by the tests were mixed for the evaluation in the fixed bed.

FZC-30 and FZC-40 used for commercial units were graded and introduced into a 200 mL small fixed bed hydrogenation device in a volume ratio of 3:1. After the conventional sulphurization treatment, the hydrotreating test was carried out in the presence of hydrogen. Test conditions were: reaction temperature: 395°C; reaction pressure: 15MPa; hydrogen/oil volume ratio: 900; liquid hourly space velocity: 0.5 h⁻¹. The evaluation results were shown in Table 3-2.

### Example 3-2

In Example 3-1, Catalyst A and Catalyst B in Example 1 were mixed in a volume ratio of 1:5. The fixed bed had a reaction temperature of 385°C. Other test conditions did not change. The evaluation results were shown in Table 3-2.

### Example 3-3

In Example 3-1, Catalyst A and Catalyst B in Example 1 were mixed in a volume ratio of 1:8. The fixed bed had a reaction pressure of 13 MPa and a hydrogen/oil volume ratio of 700. Other test conditions did not change. The evaluation results were shown in Table 3-2.

### Example 3-4

In Example 3-1, Catalyst A and Catalyst B in Example 1 were mixed in a volume ratio of 1:2. Test conditions of ebullated bed were: reaction temperature: 443°C; reaction pressure: 15MPa; reaction time: 0.5 h; oil/catalyst volume ratio: 15; the hydrogen/oil volume ratio of the fixed bed was 700. Other test conditions did not change. The evaluation results were shown in Table 3-2.

### Example 3-5

In Example 3-1, Catalyst A and Catalyst B in Example 1 were mixed in a volume ratio of 1:2. Test conditions were: reaction temperature: 443°C; reaction pressure: 11MPa; reaction time: 3 h; oil/catalyst volume ratio: 15; the fixed bed had a reaction pressure of 13 MPa and a hydrogen/oil volume ratio of 700. Other test conditions did not change. The evaluation results were shown in Table 3-2.

### Comparative Example 3-1

Only Catalyst B in Example 1-1 was used to perform the evaluation test. Other test conditions were identical to those of Example 3-1. The evaluation results were shown in Table 3-2.

### Comparative Example 3-2

Only Catalyst A in Example 1-1 was used to perform the evaluation test. Other test conditions were identical to those of Example 3-1. The evaluation results were shown in Table 3-2.

**Table 3-1 Major Physico-Chemical Properties of Example Catalyst**

| Items | FZC-30 | FZC-40 |
|---|---|---|
| MoO₃, wt% | 19.7 | 22.5 |
| NiO(CoO), wt% | 4.51 | 9.3 |
| P, wt% | 1.82 | - |
| Particle diameter, mm | 3.6 | 4 |
| Pore volume, mL/g | 0.41 | 0.40 |
| Specific surface area, m²/g | 148 | 195 |
| Pore size | 6-10nm | 4-15nm |
| distribution* | 73% | 88% |

| | | |
|---|---|---|
| * pore size distribution refers to the percentage of the pore volume of the pores with the diameters within the stated range relative to the total pore volume. | | |

**Table 3-2 Evaluation Results of Catalyst Performances**

| Items | | Example 3-1 | Example 3-2 | Example 3-3 | Example 3-4 | Example 3-5 | Comparative Example 3-1 | Comparative Example 3-2 |
|---|---|---|---|---|---|---|---|---|
| Ebullated bed process conditions | | | | | | | | |
| | Temperature/°C | 408 | 408 | 408 | 443 | 443 | 408 | 408 |
| | Pressure/MPa | 13 | 13 | 13 | 15 | 11 | 13 | 13 |
| | Reaction time/h | 0.5 | 0.5 | 0.5 | 0.5 | 3 | 0.5 | 0.5 |
| | Oil/catalyst volume | 15 | 15 | 15 | 15 | 15 | 15 | 15 |
| ratio | | | | | | | | |
| Fixed bed process | | | | | | | | |
| conditions | | | | | | | | |
| | Temperature/°C | 395 | 385 | 395 | 395 | 395 | 395 | 395 |
| | Pressure/MPa | 15 | 15 | 13 | 15 | 13 | 15 | 15 |
| | Hydrogen/oil volume | 900 | 900 | 700 | 700 | 700 | 900 | 900 |
| ratio | | | | | | | | |
| | Space velocity/h⁻¹ | 0.5 | 0.5 | 0.5 | 0.5 | 0.5 | 0.5 | 0.5 |
| Relative hydrogenation | | | | | | | | |
| activity | | 89 | 108 | 118 | 125 | 152 | 100 | 82 |
| | Desulphurization rate | | | | | | | |
| | Demetallization rate* | 128 | 102 | 98 | 143 | 145 | 100 | 130 |
| | Asphaltene conversion | 120 | 105 | 102 | 129 | 138 | 100 | 121 |

| | | | | | | | | |
|---|---|---|---|---|---|---|---|---|
| *the metal was(Ni + V + Fe). | | | | | | | | |

In the above table, the activity of Comparative Example 3-1 was taken as 100, and the activity values of other examples were the relative activity obtained by being compared with Comparative Example 3-1.

It can be seen from the above table: the mixture of hydrogenation Catalysts A and B with different physico-chemical properties was used in ebullated bed for the processing in combination with the fixed bed, and the resultant hydrogenation activity was significantly improved in one or more aspects of hydrodesulphurization, hydrodemallization rate and asphaltene conversion as compared to the single catalyst used for ebullated bed, and synergy was generated, so that the deficiencies of using a single catalyst were overcome. This unique combination technique of ebullated bed and fixed bed produced the better hydrogenation effect.

## Claims

1. A heavy crude oil ebullated bed hydrotreating process, wherein a heavy crude oil and hydrogen are introduced into an ebullated bed hydrotreating reactor from the bottom of the reactor for carrying out reaction under the heavy crude oil hydrotreating conditions, and then the reaction products are discharged from the top of the reactor; wherein a mixed catalyst is used in the ebullated bed hydrotreating reactor, said mixed catalyst is a physical mixture of at least two catalysts, said two catalysts are Catalyst A and Catalyst B, the mixed volume ratio of Catalyst A to Catalyst B is 1: (0.1-10); wherein Catalyst A and Catalyst B are in a completely mixed state,
wherein Catalyst A has a specific surface area of 80-200m²/g and an average pore diameter of more than 20 nm, the pore volume of the pores having a pore diameter of 30-300nm comprises 35 vol.%-60 vol.% of the total pore volume of Catalyst A; Catalyst A contains 1.0 wt%-10.0 wt% of a metal oxide of group VIB, and 0.1 wt%-8.0 wt% of a metal oxide of group VIII, by the total weight of Catalyst A; and wherein Catalyst B has a specific surface area of 180-300m²/g and an average pore diameter of 9-15nm, the pore volume of the pores having a pore diameter of 5-20 nm comprises at least 70 vol. % of the total pore volume of Catalyst B; Catalyst B contains 3.0 wt%-20.0 wt% of a metal oxide of group VIB, and 0.3 wt%-8.0 wt% of a metal oxide of group VIII, by total weight of Catalyst B.

2. A process according to claim 1, wherein both Catalyst A and Catalyst B particles are spherical and have a diameter of 0.1-0.8mm.

3. A process according to claim 1 or 2, wherein the average pore diameter of Catalyst A is 22-40 nm.

4. A process according to any one of the claims 1 to 3, wherein the mixed volume ratio of Catalyst A to Catalyst B is 1: (0.5-5).

5. A process according to any one of the claims 1 to 4, wherein, by the weight percent of the oxide in the respective catalyst, the percent of the hydrogenation active metal in Catalyst B is higher than that of the hydrogenation active metal in Catalyst A by 1 to 18 percents.

6. A process according to any one of the claims 1 to 5, wherein Catalyst B contains 10 vol.%-28 vol.% of the pores having a pore diameter of greater than 20 nm, and the pore volume of the pores having a pore diameter of greater than 20 nm is not less than 0.1 mL/g.

7. A process according to any one of the claims 1 to 6, wherein Catalyst B contains 10 vol.%-25 vol.% of the pores having a pore diameter of greater than 20 nm, and the pore volume of the pores having a pore diameter of greater than 20 nm is 0.1.-0.3mL/g.

8. A process according to any one of the claims 1 to 7, wherein Catalyst A contains 1.5 wt%-6.5 wt% of a metal oxide of group VIB, and 0.5 wt%-5.0 wt% of a metal oxide of group VIII, by the total weight of Catalyst A; Catalyst B contains 6.0 wt%-15.0 wt% of a metal oxide of group VIB, and 0.5 wt%-5.0 wt% of a metal oxide of group VIII, by the total weight of Catalyst B.

9. A process according to any one of the claims 1 to 8, wherein the conditions of the ebullated bed hydrotreating comprises: reaction temperature: 350-500°C; reaction pressure: 8-25MPa; the hydrogen/oil volume ratio: 100-1000; liquid hourly space velocity: 0.3-5.0h⁻¹.

10. A process according to any one of the claims 1 to 9, wherein one
ebullated bed hydrogenation reactor is used, or multiple ebullated bed hydrogenation reactors are used in parallel and/or in series, wherein at least one ebullated bed hydrogenation reactor uses said mixed catalyst.

11. A process according to claim 10, wherein 3 ebullated bed reactors in
series are set up in the ebullated bed heavy oil hydrotreating process, i.e., a first ebullated bed reactor R101, a second ebullated bed reactor R102 and a third ebullated bed reactor R 103; and R101 and R102 are of a switch operation manner, i.e. the operation is performed in cycle in accordance with the following mode:
(1) the reaction feedstocks go through R101, R102, and R103 sequentially; and then
(2) R101 is switched off for replacing catalyst, and the reaction feedstocks go through R102 and R103 sequentially; after the catalyst in R101 is replaced, the reaction feedstocks go through R101, R102, and R103 sequentially; and/or
(3) R102 is switched off for replacing catalyst, and the reaction feedstocks go through R101 and R103 sequentially; after the catalyst in R102 is replaced, the reaction feedstocks go through R101, R102, and R103 sequentially;
wherein at least one reactor of R101, R102 and R103 is loaded with said mixed catalyst.

12. A process according to claim 11, wherein no catalyst on-line addition
and withdrawal system is set up for the ebullated bed reactors R101,
R102 and/or R103.

13. A process according to claim 11, wherein R101 is switched off for replacing catalyst once every 3 to 9 months and R102 is switched off for replacing catalyst once every 5 to 18 months.

14. A process according to claim 11, wherein a high-pressure
low-temperature reactor R104 is set up, the pressure grade of R104 is identical to that of the reaction system, the temperature of R104 is 150-300°C, R104 is adjusted to the desired operation conditions before R101 or R102 needs replacing of catalyst, and when R101 or R102 is switched off from the reaction system, the catalyst in R101 or R102 is rapidly withdrawn into R104.

15. A process according to any one of the claims 11 to 14, wherein the
three ebullated bed reactors have the same volume.

16. A process according to any one of the claims 11 to 15, wherein the
reaction pressure is 8-25MPa; the hydrogen/oil volume ratio is 100:1-1000:1; the total liquid hourly space velocity is 0.1-5.0h⁻¹, R101 has the reaction temperature of 380-430°C, R102 has the reaction temperature of 380-430°C, and R103 has the reaction temperature of 380-440°C.

17. A process according to any one of the claims 11 to 16, wherein, while
R101 or R102 is switched off from the reaction system for replacing catalyst, the feeding amounts are reduced to 50wt%-80wt% of those for the normal operation.

18. A process according to any one of the claims 11 to 17, wherein, while
R101 or R102 is switched off from the reaction system for replacing catalyst, the reaction temperature is increased to achieve the normal reaction effects.

19. A process according to any one of the claims 11 to 18, wherein, the
catalyst used in R101 has the properties: the catalyst has a specific surface area of 80-200m²/g and an average pore diameter of greater than 20 nm, preferably 22-40 nm, the pore volume of the pores having a pore diameter >20 nm comprises at least 40 vol.% of the total pore volume; by weight, the catalyst contains 1.0%-10.0%, 1.5%-8.5% at best, of a metal oxide of group VIB, and 0.1%-8.0%, 0.5%-5.0% at best, of a metal oxide of group VIII.

20. A process according to any one of the claims 11 to 19, wherein, the
catalyst used in R102 has the properties: the catalyst has a specific surface area of 80-300m²/g and an average pore diameter of greater than 12 nm, preferably 12-30 nm, the pore volume of the pores having a pore diameter >20 nm comprises at least 20 vol.% of the total pore volume; by weight, the catalyst contains 1.0%-15.0%, 1.5%-13% at best, of a metal oxide of group VIB, and 0.1%-8.0%, 1.0%-5.0% at best, of a metal oxide of group VIII.

21. A process according to any one of the claims 11 to 20, wherein, the
catalyst used in R103 has the properties: the catalyst has a specific surface area of 180-300m²/g and an average pore diameter of greater than 9 nm, preferably 9-15 nm, the pore volume of the pores having a pore diameter >20 nm comprises at least 10 vol.% of the total pore volume; by weight, the catalyst contains 3.0%-20.0%, 6.0%-18.0% at best, of a metal oxide of group VIB, and 0.3%-8.0%, 0.5%-5.0% at best, of a metal oxide of group VIII.

22. A process according to any one of the claims 11 to 21, wherein the
catalyst particles in all of the three ebullated bed reactors are spherical and have a diameter of 0.1-0.8mm, preferably 0.1-0.6mm.

23. A process according to any one of the claims 11 to 22, which further includes a fixed bed reactor in combination with said ebullated bed reactors; after the hydrogenation reaction in the ebullated bed, the reaction products are discharged from the top of the ebullated bed reactors to flow to the fixed bed reactor so as to carry out a further hydrogenation reaction under the hydrogenation conditions of fixed bed; the reaction products of the fixed bed reactor are discharged from the bottom of the fixed bed reactor to flow to a separation system.

24. A process according to claim 23, wherein the fixed bed hydrotreating
has the reaction temperature of 350-420°C, the reaction pressure of 8-25MPa, the hydrogen/oil volume ratio of 100-1000 and the liquid hourly space velocity of 0.3-2.0h⁻¹.

## Patentansprüche

1. Fließbett-Hydrobehandlungsverfahren von schwerem Rohöl, worin ein schweres Rohöl und Wasserstoff in einen Fließbett-Hydrobehandlungsreaktor vom Boden des Reaktors zur Durchführung der Reaktion unter Hydrobehandlungsbedingungen für schweres Rohöl eingeführt und dann die Reaktionsprodukte von der oberen Seite des Reaktors abgelassen werden,
worin ein gemischter Katalysator im Fließbett-Hydrobehandlungsreaktor verwendet wird, wobei der gemischte Katalysator eine physikalische Mischung von zumindest zwei Katalysatoren ist, wobei die zwei Katalysatoren Katalysator A und Katalysator B sind, das gemischte Volumenverhältnis von Katalysator A zu Katalysator B 1 : (0,1-10) ist, worin der Katalysator A und der Katalysator B in einem vollständig gemischten Zustand vorliegen,
worin der Katalysator A eine spezifische Oberfläche von 80-200 m²/g und einen durchschnittlichen Porendurchmesser von mehr als 20 nm hat, das Porenvolumen der Poren mit einem Porendurchmesser von 30-300 nm 35-60 Vol.-% des gesamten Porenvolumens von Katalysator A enthält; der Katalysator A 1,0-10,0 Gew.-% eines Metalloxides der Gruppe VIB und 0,1-8,0 Gew.-% eines Metalloxides der Gruppe VIII enthält, bezogen auf das Gesamtgewicht des Katalysators A, und
worin der Katalysator B eine spezifische Oberfläche von 180-300 m²/g und einen durchschnittlichen Porendurchmesser von 9-15 nm hat, wobei das Porenvolumen der Poren mit einem Porendurchmesser von 5-20 nm zumindest 70 Vol.-% des gesamten Porenvolumens des Katalysators B enthält; der Katalysator B 3,0-20,0 Gew.- % eines Metalloxides der Gruppe VIB und 0,3-8,0 Gew.-% eines Metalloxides der Gruppe VIII enthält, bezogen auf das Gesamtgewicht des Katalysators B.

2. Verfahren nach Anspruch 1, worin die Teilchen von Katalysator A und Katalysator B sphärisch sind und einen Durchmesser von 0,1-0,8 mm haben.

3. Verfahren nach Anspruch 1 oder 2, worin der durchschnittliche Porendurchmesser von Katalysator A 22-40 nm ist.

4. Verfahren nach einem der Ansprüche 1 bis 3, worin das gemischte Volumenverhältnis von Katalysator A zu Katalysator B 1 : (0,5-5) ist.

5. Verfahren nach einem der Ansprüche 1 bis 4, worin, ausgedrückt als Gewichtsprozent des Oxides in dem jeweiligen Katalysator, der Prozentsatz des aktiven Hydrierungsmetalls im Katalysator B um 1-18% höher ist als der des aktiven Hydrierungsmetalls im Katalysator A.

6. Verfahren nach einem der Ansprüche 1 bis 5, worin der Katalysator B 10-28 Vol.-% der Poren mit einem Porendurchmesser von mehr als 20 nm enthält und das Porenvolumen der Poren mit einem Porendurchmesser von mehr als 20 nm nicht weniger als 0,1 ml/g ist.

7. Verfahren nach einem der Ansprüche 1 bis 6, worin der Katalysator B 10-25 Vol.-% der Poren mit einem Porendurchmesser von mehr als 20 nm enthält und das Porenvolumen der Poren mit einem Porendurchmesser von mehr als 20 nm 0,1 bis 0,3 ml/g ist.

8. Verfahren nach einem der Ansprüche 1 bis 7, worin Katalysator A 1,5-6,5 Gew.-% eines Metalloxides der Gruppe VIB und 0,5-5,0 Gew.-% eines Metalloxides der Gruppe VIII enthält, bezogen auf das Gesamtgewicht des Katalysators; der Katalysator B 6,0-15,0 Gew.-% eines Metalloxides der Gruppe VIB und 0,5-5,0 Gew.-% eines Metalloxides der Gruppe VIII enthält, bezogen auf das Gesamtgewicht des Katalysators B.

9. Verfahren nach einem der Ansprüche 1 bis 8, worin die Bedingungen der Fließbett-Hydrobehandlung umfassen:
Reaktionstemperatur 350-500°C, Reaktionsdruck 8-25 MPa, Wasserstoff/Öl-Volumenverhältnis 100-1000, flüssige stündliche Raumgeschwindigkeit 0,3-5,0 h⁻¹.

10. Verfahren nach einem der Ansprüche 1 bis 9, worin ein Fließbett-Hydrierungsreaktor oder mehrere Fließbett-Hydrierungsreaktoren parallel und/oder in Serie verwendet werden, worin zumindest ein Fließbett-Hydrierungsreaktor den gemischten Katalysator verwendet.

11. Verfahren nach Anspruch 10, worin drei Fließbett-Reaktoren in Serie im Fließbett-Hydrobehandlungsverfahren für schweres Öl eingesetzt werden, das heißt ein erster Fließbett-Reaktor R101, ein zweiter Fließbett-Reaktor R102 und ein dritter Fließbett-Reaktor R103; und R101 und R102 von einer Schaltbetriebsart sind, das heißt, dass der Betrieb im Zyklus entsprechend folgendem Modus durchgeführt wird:
(1) die Reaktionsmaterialien gehen aufeinanderfolgend durch R101, R102 und R103, und dann
(2) wird R101 zum Ersatz des Katalysators abgeschaltet, und die Reaktionsmaterialien gehen aufeinanderfolgend durch R102 und R103; nachdem der Katalysator in R101 ersetzt ist, gehen die Reaktionsmaterialien aufeinanderfolgend durch R101, R102 und R103; und/oder
(3) R102 wird zum Ersatz des Katalysators abgeschaltet, und die Reaktionsmaterialien gehen aufeinanderfolgend durch R101 und R103; nachdem der Katalysator in R102 ersetzt ist, gehen die Reaktionsmaterialien aufeinanderfolgend durch R101, R102 und R103;
worin zumindest einer der Reaktoren von R101, R102 und R103 mit dem gemischten Katalysator beladen wird.

12. Verfahren nach Anspruch 11, worin kein Katalysatoronline-Additions- und Abzugssystem für die Fließbett-Reaktoren R101, R102 und/oder R103 eingestellt wird.

13. Verfahren nach Anspruch 11, worin R101 zum Ersatz des Katalysators alle 3 bis 9 Monate und R102 für den Ersatz des Katalysators alle 5 bis 18 Monate abgeschaltet wird.

14. Verfahren nach Anspruch 11, worin ein Hochdruck-Niedertemperatur-Reaktor R104 eingestellt wird, wobei der Druckgrad von R104 identisch ist wie bei dem Reaktionssystem, die Temperatur von R104 150-300°C ist, R104 für die gewünschten Betriebsbedingungen eingestellt wird, bevor R101 oder R102 den Katalysator ersetzen muss, und wenn R101 oder R102 vom Reaktionssystem abgeschaltet sind, wird der Katalysator in R101 oder R102 schnell zu R104 abgezogen.

15. Verfahren nach einem der Ansprüche 11 bis 14, worin die drei Fließbett-Reaktoren das gleiche Volumen haben.

16. Verfahren nach einem der Ansprüche 11 bis 15, worin der Reaktionsdruck 8-15 MPa ist, das Wasserstoff/Öl-Volumenverhältnis 100 : 1 - 1000 : 1 ist, die gesamte flüssige stündliche Raumgeschwindigkeit 0,5-5,0 h⁻¹ ist, R101 eine Reaktionstemperatur von 380-430°C hat, R102 eine Reaktionstemperatur von 380-430°C hat und R103 eine Reaktionstemperatur von 380-440°C hat.

17. Verfahren nach einem der Ansprüche 11 bis 16, worin, während R101 oder R102 vom Reaktionssystem zum Ersatz des Katalysators abgeschaltet wird, die Zuführmengen auf 50-80 Gew.-% von jenen für den normalen Betrieb reduziert werden.

18. Verfahren nach einem der Ansprüche 11 bis 17, worin dann, während R101 oder R102 vom Reaktionssystem zum Ersatz des Katalysators geschaltet wird, die Reaktionstemperatur erhöht wird, unter Erhalt der normalen Reaktionswirkungen.

19. Verfahren nach einem der Ansprüche 11 bis 18, worin der bei R101 verwendete Katalysator die folgenden Eigenschaften hat: der Katalysator hat eine spezifische Oberfläche von 80-200 m²/g und einen durchschnittlichen Porendurchmesser von mehr als 20 nm, bevorzugt 22-40 nm, das Porenvolumen der Poren mit einem Porendurchmesser >20 nm enthält zumindest 40 Vol.-% des gesamten Porenvolumens; bezogen auf das Gewicht enthält der Katalysator 1,0-10,0%, bevorzugt 1,5-8,5% eines Metalloxides der Gruppe VIB und 0,1-8,0%, am besten 0,5-5,0% eines Metalloxides der Gruppe VIII.

20. Verfahren nach einem der Ansprüche 11 bis 19, worin der in R102 verwendete Katalysator folgende Eigenschaften hat: der Katalysator hat eine spezifische Oberfläche von 80-300 m²/g und einen durchschnittlichen Porendurchmesser von mehr als 12 nm, bevorzugt 12-30 nm, das Porenvolumen der Poren mit einem Porendurchmesser >20 nm enthält zumindest 20 Vol.-% des gesamten Porenvolumens; bezogen auf das Gewicht enthält der Katalysator 1,0-15,0%, bevorzugt 1,5-13% eines Metalloxides der Gruppe VIB und 0,1-8,0%, am besten 1,0-5,0% eines Metalloxides der Gruppe VIII.

21. Verfahren nach einem der Ansprüche 11 bis 20, worin der in R103 verwendete Katalysator folgende Eigenschaften hat: der Katalysator hat eine spezifische Oberfläche von 180-300 m²/g und einen durchschnittlichen Porendurchmesser von mehr als 9 nm, bevorzugt 9-15 nm, das Porenvolumen der Poren mit einem Porendurchmesser >20 nm enthält zumindest 10 Vol.-% des gesamten Porenvolumens; bezogen auf das Gewicht enthält der Katalysator 3,0-20,0%, bevorzugt 6,0-18,0% eines Metalloxides der Gruppe VIB und 0,3-8,0%, am besten 0,5-5,0% eines Metalloxides der Gruppe VIII.

22. Verfahren nach einem der Ansprüche 11 bis 21, worin die Katalysatorteilchen in allen drei Fließbett-Reaktoren sphärisch sind und einen Durchmesser von 0,1-0,8 mm, bevorzugt 0,1-0,6 mm haben.

23. Verfahren nach einem der Ansprüche 11 bis 22, weiterhin umfassend einen Festbett-Reaktor in Kombination mit den Fließbett-Reaktoren; wobei nach der Hydrierungsreaktion im Fließbett die Reaktionsprodukte von der oberen Seite der Fließbett-Reaktoren abgelassen werden, zum Fließen zum Festbett-Reaktor, zur Durchführung einer weitern Hydrierungsreaktion unter Hydrierungsbedingungen des Festbetts; wobei die Reaktionsprodukte des Festbett-Reaktors vom Boden des Festbett-Reaktors abgelassen werden, zum Fließen zu einem Trennsystem.

24. Verfahren nach Anspruch 23, worin die Festbett-Hydrobehandlung eine Reaktionstemperatur von 350-420°C, einen Reaktionsdruck von 8-25 MPa, ein Wasserstoff/Öl-Volumenverhältnis von 100-1000 und einen flüssige stündliche Raumgeschwindigkeit von 0,3-2,0 h⁻¹ hat.

## Revendications

1. Un procédé d'hydrotraitement en lit bouillonnant pour pétrole brut lourd, dans lequel un pétrole brut lourd et de l'hydrogène sont introduits dans un réacteur d'hydrotraitement à lit bouillonnant par le bas du réacteur pour effectuer une réaction sous les conditions d'hydrotraitement de pétrole brut lourd, puis les produits de réaction sont déchargés par le haut du réacteur;
dans lequel un catalyseur mixte est utilisé dans le réacteur d'hydrotraitement à lit bouillonnant, ledit catalyseur mixte est un mélange physique d'au moins deux catalyseurs, lesdits deux catalyseurs sont Catalyseur A et Catalyseur B, le rapport volumique mélangé de Catalyseur A au Catalyseur B est de 1: (0,1-10); dans lequel Catalyseur A et Catalyseur B sont dans un état complètement mélangé,
dans lequel Catalyseur A a une surface spécifique de 80 à 200m³/g et un diamètre de pore moyen de plus de 20 nm, le volume de pore des pores ayant un diamètre de pore de 30 à 300nm comprend de 35 à 60 % en volume du volume de pore total de Catalyseur A; Catalyseur A contient de 1,0 à 10,0 % en poids d'un oxyde de métal du groupe VIB, et de 0,1 à 8,0 % en poids d'un oxyde de métal du groupe VIII, pour le poids total de Catalyseur A; et
dans lequel Catalyseur B a une surface spécifique de 180 à 300m²/g et un diamètre de pore moyen de 9 à 15nm, le volume de pore des pores ayant un diamètre de pore de 5 à 20nm comprend au moins 70 % en volume du volume de pore total de Catalyseur B; Catalyseur B contient de 3,0 à 20,0 % en poids d'un oxyde de métal du groupe VIB, et de 0,3 à 8,0 % en poids d'un oxyde de métal du groupe VIII, pour le poids total de Catalyseur B.

2. Un procédé selon la revendication 1, dans lequel les particules des deux Catalyseur A et Catalyseur B sont sphériques et ont un diamètre de 0,1 à 8mm.

3. Un procédé selon la revendication 1 ou 2, dans lequel le diamètre de pore moyen du Catalyseur A est de 22 à 40nm.

4. Un procédé selon l'une quelconque des revendications 1 à 3, dans lequel le rapport volumique mélangé de Catalyseur A au Catalyseur B est de 1: (0,5-5).

5. Un procédé selon l'une quelconque des revendications 1 à 4, dans lequel, pour le pourcentage en poids de l'oxyde dans le catalyseur respectif, le pourcentage du métal actif d'hydrogénation dans le Catalyseur B est supérieur de 1 à 18 pourcents à celui de métal actif d'hydrogénation dans le Catalyseur A.

6. Un procédé selon l'une quelconque des revendications 1 à 5, dans lequel Catalyseur B contient de 10 à 28 % en volume des pores ayant un diamètre de pore de plus de 20 nm, et le volume de pore des pores ayant un diamètre de pore de plus de 20 nm n'est pas inférieur à 0,1mL/g.

7. Un procédé selon l'une quelconque des revendications 1 à 6, dans lequel Catalyseur B contient de 10 à 25 % en volume des pores ayant un diamètre de pore de plus de 20 nm, et le volume de pore de pores ayant un diamètre de pore de plus de 20 nm est de 0,1 à 0,3 mL/g.

8. Un procédé selon l'une quelconque des revendications 1 à 7, dans lequel Catalyseur A contient de 1,5 à 6,5 % en poids d'un oxyde de métal du groupe VIB, et de 0,5 à 5,0 % en poids d'un oxyde de métal du groupe VIII, pour le poids total de Catalyseur A; Catalyseur B contient de 6,0 à 15,0 % en poids d'un oxyde métal du groupe VIB, et de 0,5 à 5,0 % en poids d'un oxyde de métal du groupe VIII, pour le poids total de Catalyseur B.

9. Un procédé selon l'une quelconque des revendications 1 à 8, dans lequel les conditions de l'hydrotraitement en lit bouillonnant comprennent: température de réaction: 350-500°C; pression de réaction: 8-25MPa; le rapport volumique hydrogène/pétrole: 100-1000; vitesse spatiale horaire liquide: 0,3-5, 0h⁻¹.

10. Un procédé selon l'une quelconque des revendications 1 à 9, dans lequel un réacteur d'hydrogénation à lit bouillonnant est utilisé, ou de multiples réacteurs d'hydrogénation à lit bouillonnant sont utilisés en parallèle et/ou en série, dans lequel au moins un réacteur d'hydrogénation à lit bouillonnant utilise ledit catalyseur mixte.

11. Un procédé selon la revendication 10, dans lequel 3 réacteurs à lit bouillonnant en série sont mis en place dans le procédé d'hydrotraitement en lit bouillonnant de pétrole lourd, c'est-à-dire, un premier réacteur à lit bouillonnant R101, un second réacteur à lit bouillonnant R102 et un troisième réacteur à lit bouillonnant R103; et R101 et R102 opèrent de façon commutative, c'est-à-dire l'opération est effectuée en cycle en accordance avec le modèle suivant:
(1) les matières premières de réaction passent par R101, R102, et R103 séquentiellement; et puis
(2) R101 est éteint pour remplacer le catalyseur, et les matières premières de réaction passent par R102 et R103 séquentiellement; lorsque le catalyseur dans R101 est remplacé, les matières premières de réaction passent par R101, R102, et R103 séquentiellement; et/ou
(3) R102 est éteint pour remplacer le catalyseur, et les matières premières de réaction passent par R101 et R103 séquentiellement; lorsque le catalyseur dans R102 est remplacé, les matières premières de réaction passent par R101, R102, et R103 séquentiellement;
dans lequel au moins un réacteur de R101, R102 et R103 est chargé avec ledit catalyseur mixte.

12. Un procédé selon la revendication 11, dans lequel pas d'addition en ligne de catalyseur ni de système d'extraction ne sont mis en place pour les réacteurs à lit bouillonnant R101, R102 et/ou R103.

13. Un procédé selon la revendication 11, dans lequel R101 est éteint pour remplacer le catalyseur une fois tous les 3 à 9 mois et R102 est éteint pour remplacer le catalyseur une fois tous les 5 à 18 mois.

14. Un procédé selon la revendication 11, dans lequel un réacteur à faible pression et basse température R104 est mis en place, le degré de pression de R104 est identique à celui du système de réaction, la température de R104 est de 150 à 300°C, R104 est ajusté aux conditions d'opération désirées avant que le catalyseur dans R101 ou R102 ne doive être remplacé, et lorsque R101 ou R102 est éteint du système de réaction, le catalyseur dans R101 ou R102 est rapidement extrait dans R104.

15. Un procédé selon l'une quelconque des revendications 11 à 14, dans lequel les trois réacteurs à lit bouillonnant ont le même volume.

16. Un procédé selon l'une quelconque des revendications 11 à 15, dans lequel la pression de réaction est de 8 à 25MPa; le rapport volumique hydrogène/pétrole est de 100:1 à 1000:1; la vitesse spatiale horaire liquide est de 0,1 à 5,0h⁻¹, R101 a la température de réaction de 380 à 430°C, R102 a la température de réaction de 380 à 430°C, et R103 a la température de réaction de 380 à 440°C.

17. Un procédé selon l'une quelconque des revendications 11 à 16, dans lequel, pendant que R101 ou R102 est éteint du système de réaction pour remplacer le catalyseur, les quantités approvisionnées sont réduites de 50 à 80% en poids par rapport à celles de l'opération normale.

18. Un procédé selon l'une quelconque des revendications 11 à 17, dans lequel, pendant que R101 ou R102 est éteint du système de réaction pour remplacer le catalyseur, la température de réaction est élevée pour réaliser les effets de la réaction normale.

19. Un procédé selon l'une quelconque des revendications 11 à 18, dans lequel, le catalyseur utilisé dans R101 a les propriétés: le catalyseur a une surface spécifique de 80 à 200m²/g et un diamètre de pore moyen supérieur à 20 nm, préférablement de 22 à 40 nm, le volume de pore des pores ayant un diamètre de pore >20 nm comprend au moins 40 % en volume du volume de pore total; en poids, le catalyseur contient de 1,0% à 10,0%, de 1,5% à 8,5% au mieux, d'un oxyde de métal du groupe VIB, et de 0,1% à 8,0%, de 0,5% à 5,0% au mieux, d'un oxyde de métal du groupe VIII.

20. Un procédé selon l'une quelconque des revendications 11 à 19, dans lequel, le catalyseur utilisé dans R102 a les propriétés: le catalyseur a une surface spécifique de 80 à 300m²/g et un diamètre de pore moyen supérieur à 12 mm, préférablement de 12 à 30 nm, le volume de pore des pores ayant un diamètre de pore >20 nm comprend au moins 20 % en volume du volume de pore total; en poids, le catalyseur contient de 1,0% à 15,0%, de 1,5% à 13% au mieux, d'un oxyde de métal du groupe VIB, et de 0,1% à 8,0%, de 1,0% à 5,0% au mieux, d'un oxyde de métal du groupe VIII.

21. Un procédé selon l'une quelconque des revendications 11 à 20, dans lequel, le catalyseur utilisé dans R103 a les propriétés: le catalyseur a une surface spécifique de 180 à 300m²/g et un diamètre de pore moyen supérieur à 9 nm, préférablement de 9 à 15 nm, le volume de pore des pores ayant un diamètre de pore >20 nm comprend au moins 10 % en volume du volume de pore total; en poids, le catalyseur contient de 3,0 à 20,0%, de 6,0% à 18,0% au mieux, d'un oxyde de métal du groupe VIB, et de 0,3% à 8,0%, de 0,5% à 5,0% au mieux, d'un oxyde de métal du groupe VIII.

22. Un procédé selon l'une quelconque des revendications 11 à 21, dans lequel les particules de catalyseur dans tous les trois réacteurs à lit bouillonnant sont sphériques et one un diamètre de 0,1 à 8,0mm, préférablement de 0,1 à 0,6mm.

23. Un procédé selon l'une quelconque des revendications 11 à 22, qui inclut en outre un réacteur à lit fixe en combinaison avec lesdits réacteurs à lit bouillonnant; après la réaction d'hydrogénation dans le lit bouillonnant, les produits de réaction sont déchargés par le haut des réacteurs à lit bouillonnant pour s'écouler jusqu'au réacteur à lit fixe afin d'effectuer une réaction d'hydrogénation supplémentaire sous les conditions d'hydrogénation en lit fixe; les produits de réaction du réacteur à lit fixe sont déchargés par le fond du réacteur à lit fixe pour s'écouler jusqu'à un système de séparation.

24. Un procédé selon la revendication 23, dans lequel l'hydrotraitement en lit fixe a la température de réaction de 350 à 420°C, la pression de réaction de 8 à 25MPa, le rapport volumique hydrogène/pétrole de 100 à 1000 et la vitesse spatiale horaire liquide de 0,3 à 2,0h⁻¹.
